# FASCICULE DE BREVET EUROPEEN

(11) **EP 0 636 448 B1**
(45) Date de publication et mention de la délivrance du brevet: **10.02.1999**
(21) Numéro de dépôt: 94400876.2
(22) Date de dépôt: 22.04.1994
(51) Int. Cl.: B23Q 1/56, B23Q 1/54, B23Q 7/14

(54) **Unité d'indexation précise d'une palette dans le référentiel d'un poste de travail**
Genaue Indexierungseinheit für eine Palette gegenüber einer Bearbeitungsstation
Precision indexing unit for a pallet relative to a work station

(30) Priorité: 29.06.1993 FR 9307902
(43) Date de publication de la demande: 01.02.1995
(73) Titulaire: RENAULT AUTOMATION, 92100 Boulogne (FR)
(72) Inventeur: Thurier, Yvan, F-94320 Thiais (FR)
(74) Mandataire: Robert, Jean-Pierre

(56) Documents cités:
- EP-A- 0 135 029
- EP-A- 0 251 886
- WO-A-89/00525
- GB-A- 2 038 671
- US-A- 4 148 400
- US-A- 4 579 031

## Description

La présente invention concerne une unité d'indexation précise pour une palette porte-charge à l'endroit d'un poste de travail, notamment lorsque ce poste est desservi par un transporteur d'amenée et d'évacuation des palettes.

Dans les lignes de montage ou d'assemblage de pièces mécaniques comme cela se rencontre particulièrement dans l'industrie automobile, les ensembles ou sous-ensembles à usiner ou à assembler sont disposés sur des palettes lesquelles sont acheminées aux différents postes d'assemblage ou d'usinage au moyen d'un transporteur plan. Il existe plusieurs types de transporteurs qui desservent successivement ces postes et chaque palette retenue à un poste de travail doit être découplée du transporteur et mise en place de manière précise par rapport à un référentiel de ce poste de travail pour que les outils automatiques qui y sont mis en oeuvre puissent opérer correctement.

Pour découpler la palette de l'organe d'entraînement du transporteur qui coopère avec elle, il suffit en général de l'élever par rapport au plan de déplacement.

Dans le secteur de l'assemblage ou du montage des pièces mécaniques d'un véhicule, par exemple un moteur c'est-à-dire des pièces de relativement faible encombrement, ce soulèvement est souvent assuré par un mécanisme qui comporte un bras horizontal dont une extrémité est montée à coulissement vertical dans un bâti fixe par rapport au poste de travail tandis que son autre extrémité comporte des moyens pour coopérer avec la face inférieure de la palette afin de l'élever pour la décoller du transporteur et la centrer par rapport à des éléments de centrage fixes solidaires du poste de travail et précisément situés dans le référentiel de celui-ci. L'inconvénient de ce type de dispositif réside dans le fait qu'il est encombrant et que le bras de soulèvement travaille avec un porte-à-faux important si bien que la précision de la prise en charge de la palette est limitée et dépend des déformations et des usures du dispositif amplifiées par ce porte-à-faux. Pour les lignes de montage ou d'assemblage des caisses de véhicules automobiles, d'autres mécanismes sont mis en oeuvre pour assurer l'indexation de la "pièce" dans le poste. Ces mécanismes sont des élévateurs généralement installés au sol, mettant en oeuvre des doigts actionnés par des systèmes de pignons-crémaillères... L'échelle même de ces dispositifs les place en dehors du domaine concerné par l'invention.

*On mentionnera enfin le document GB-A-2 038 671 qui concerne une unité d'indexation pour une palette selon le préambule de la revendication 1 et qui révèle un mécanisme d'indexation d'une palette par soulèvement de celle-ci au moyen de chandelles actionnées verticalement par des organes moteurs compressibles en direction de surfaces de butée surplombant les bords de la palette. Ces moyens de butée encombrent nécessairement l'espace de circulation des palettes.*

La présente invention entend remédier aux inconvénients des dispositifs d'indexation dans les lignes de montage de pièces mécaniques en proposant un dispositif simple et compact pour indexer de manière précise une palette dans le référentiel d'un poste de travail. A cet effet, l'invention a donc pour objet une unité d'indexation au moyen de laquelle la palette est élevée au-dessus de son plan de déplacement défini par un transporteur d'alimentation et d'évacuation d'un poste de travail, qui comporte une platine pour sa fixation sous le plan de déplacement de la palette à un élément de bâti appartenant au référentiel du poste de travail, cette platine étant équipée de guides pour des chandelles élévatrices perpendiculaires à son plan et un dispositif moteur pour actionner en synchronisme les chandelles *comprenant* un palonnier mobile par rapport à la platine selon une trajectoire définie par des moyens de guidage solidaires de la platine et un organe moteur attelé entre le palonnier et la platine, *le palonnier étant en* *forme de H dont chacune des jambes parallèles coopère avec au moins deux chandelles et dont la traverse porte un axe d'articulation pour l'extrémité d'un vérin dont l'autre extrémité est articulée à la platine.*

Ce mécanisme simple permet, à l'aide d'un seul vérin, par exemple de soulever une palette par quatre colonnettes dont le mouvement est parfaitement synchrone, et qui peuvent atteindre une position d'extension maximale très précise. Compte tenu de la cinématique de la transmission du mouvement du palonnier aux chandelles ou colonnettes, une imprécision quant à la position du palonnier même importante se traduit par une imprécision extrêmement faible dans la position atteinte par chacune des chandelles. *En outre l'architecture du palonnier permet de réduire au maximum l'encombrement de l'unité.*

En outre, l'unité d'indexation est un ensemble mécanique qui peut être réalisé avec précision, indépendamment de son montage sur site qui ne demande qu'un minimum de soins pour atteler la platine au bâti appartenant au référentiel du poste, pour que les chandelles soient précisément localisées dans ce référentiel lorsqu'elles sont dans leur position active.

Il existe plusieurs modes de réalisation possibles du dispositif selon l'invention.

Selon l'un d'eux les moyens de guidage du palonnier par rapport à la platine comportent des biellettes d'articulation conservant le palonnier parallèle à lui-même dans son mouvement par rapport à la platine. Le palonnier décrit alors une trajectoire circulaire depuis une position basse jusqu'à une position haute où les biellettes d'articulation sont sensiblement orthogonales au plan contenant le palonnier, c'est-à-dire à la platine.

Dans un autre mode de réalisation les moyens de guidage du palonnier comportent des galets de roulement définissant un plan de guidage parallèle à la platine. Dans ce cas le palonnier se déplace dans un plan et le mouvement vertical des chandelles résulte de la transformation de ce mouvement en un mouvement orthogonal par les moyens du palonnier qui coopèrent avec les chandelles.

Dans l'un ou l'autre de ces modes de réalisation, ces moyens peuvent être soit des biellettes, soit de simples surfaces d'appui. Pour un palonnier articulé ces surfaces d'appui peuvent être simplement parallèles au plan du palonnier lui-même dans le cas d'un palonnier glissant sur un plan de guidage, les surfaces d'appui sont alors des surfaces de came formant des pentes pour élever les chandelles.

Cette unité comporte également de manière avantageuse une butée solidaire de la platine qui limite le mouvement du palonnier dans le sens de l'élévation des chandelles. Cette butée peut être réglable, ce qui permet d'ajuster la hauteur d'élévation de la palette prise en charge par les chandelles.

D'autres caractéristiques et avantages de l'invention ressortiront de la description de plusieurs mode de réalisation donnés ci-après à titre indicatif. Il sera fait référence aux dessins annexés dans lesquels :
- les figures 1 et 2 sont deux vues en coupe longitudinale de l'unité selon l'invention le long de son plan médian en passant par l'axe du vérin de manoeuvre, la figure 1 correspondant à la position haute des chandelles, la figure 2 correspondant à une position basse de celles-ci,
- la figure 3 est une vue de dessous du dispositif représenté à la figure 1,
- la figure 4 est une vue en coupe partielle selon la ligne IV-IV de la figure 3,
- la figure 5 est une vue semblable à celle de la figure 1 d'un second mode de réalisation de l'unité d'indexation selon l'invention,
- la figure 6 est une coupe de détail illustrant la coopération du palonnier et d'une chandelle dans le mode de réalisation de la figure 5,
- les figures 7 à 10 sont des vues schématiques illustrant d'une part les deux modes de réalisation ci-dessus et d'autre part deux variantes de ces réalisations.

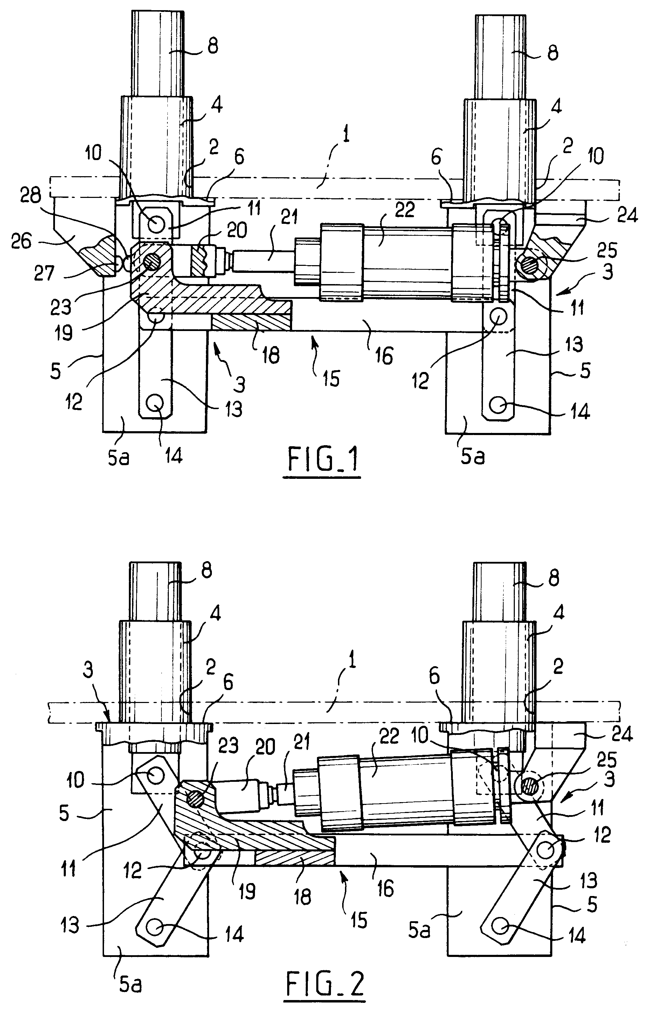

Aux figures 1 à 4, on a représenté une platine 1 constituée par une tôle épaisse dans laquelle, par exemple au sommet d'un carré sont ménagés quatre orifices 2 traversant la platine. Dans chaque orifice, on a logé une pièce cylindrique 3 qui comporte une partie supérieure de petit diamètre 4 formant un manchon tubulaire et une partie inférieure 5 de plus grand diamètre extérieur que la partie tubulaire 4 de sorte qu'entre les deux, un épaulement 6 est ménagé. Par le moyen de vis telles que V, traversant la platine 1, on peut fixer les quatre pièces 3 à la platine 6 de manière que le manchon 4 s'étende d'un côté de la platine et que la partie 5 s'étende de l'autre côté. Cette partie 5 a été largement fraisée en forme de chape avec donc deux bras 5a et 5b définissant entre eux un espace 7 dont la largeur est égale au diamètre intérieur du manchon tubulaire 4.

Chacune de ces pièces 3 peut ainsi recevoir en partie supérieure une chandelle cylindrique 8 guidée en coulissement à l'intérieur du manchon 4 et dont la partie inférieure qui se situe au niveau de la chape 5a, 5b est également fraisée pour ne comporter qu'un tenon central 9. Ce tenon central 9 constitue un palier pour un axe d'articulation 10 d'une première biellette 11 formée par deux leviers jumeaux et parallèles. Cette biellette 11 possède à son autre extrémité un axe d'articulation 12 pour une seconde biellette 13 également formée par deux leviers jumeaux et parallèles qui seront, de manière avantageuse, strictement identiques aux leviers qui forment la biellette 11. L'autre extrémité de la biellette 13 est elle-même articulée à l'extrémité des bras 5a et 5b de la chape que forme la partie 5 de la pièce 3 au moyen d'un axe fixe 14.

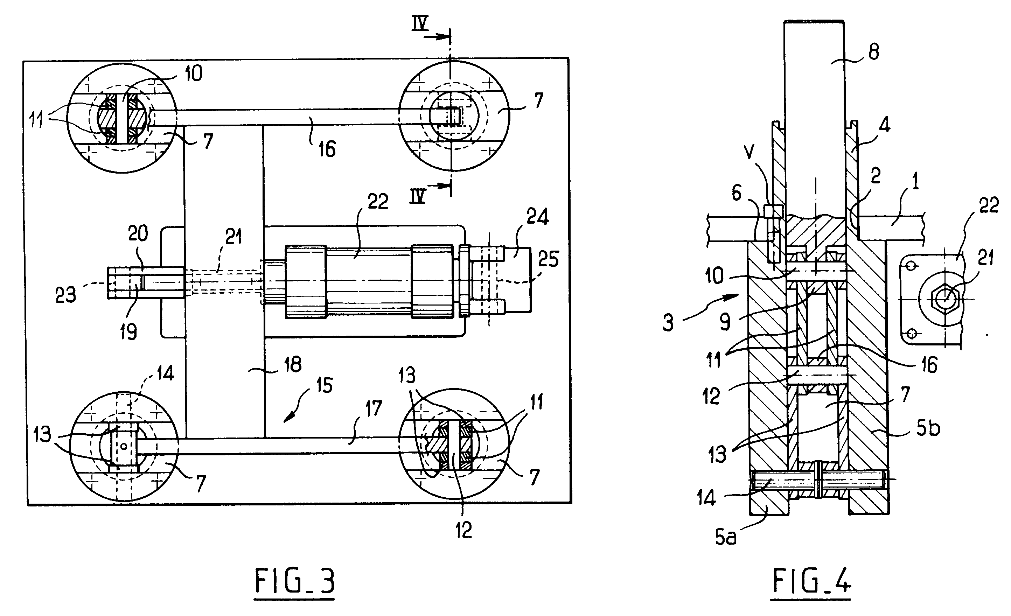

On comprend, notamment au regard de la figure 4, que l'attelage de la chandelle 8 à la pièce cylindrique 3 au moyen du couple de biellette 11, 13, permet un coulissement de cette chandelle dans le manchon 4, la saillie maximale de la chandelle à l'extérieur du manchon 4 étant atteinte lorsque les biellettes 11 et 13 sont dans l'alignement l'une de l'autre, c'est-à-dire lorsque les axes d'articulation 10, 12 et 14 sont également alignés.

La platine 1 est équipée de quatre pièces cylindriques 3, chacune d'elles étant pourvue d'une chandelle 8 et d'un couple de biellettes articulées 11, 13, de manière que tous les axes d'articulation 10, 12, 14 soient parallèles. Il est ainsi possible de relier chaque couple de biellettes avec les trois autres, au moyen d'un palonnier 15 en forme de H comme cela est représenté à la figure 3. Les deux jambes 16 et 17 parallèles du palonnier forment deux bielles de liaison des articulations 12 de deux couples de biellettes 11, 13 de manière à s'étendre perpendiculairement à ces axes 12. Chacune de ces bielles 16, 17 assure donc le synchronisme des déformations des couples de biellettes 11, 13 reliées. Le synchronisme du coulissement de toutes les chandelles 8 dans les guides 4 est assuré en reliant par une traverse 18 les deux bielles 16 et 17.

On aura noté que l'épaisseur de chacune des bielles 16 et 17 est égale à l'épaisseur du tenon 9 de chaque chandelle, tous les leviers formant les biellettes 11, 13 sont d'égale épaisseur et qu'on a disposé au niveau des axes 10 et 14 des entretoises d'épaisseur appropriée pour que l'ensemble de l'équipage mobile attaché à chaque chandelle 8 soit correctement guidé entre les deux bras 5a et 5b de la pièce 5. On se reportera à cet égard à la figure 3 où des vues partielles en coupe ont été réalisées au niveau de l'axe 10 et de l'axe 12.

On aura remarqué qu'aux figures 1 et 2, les pièces 5 sont représentées avec arrachement du bras 5b de manière à apercevoir l'embiellage de chaque chandelle 8.

La traverse 18 du palonnier 15 porte dans sa partie médiane un bec 19 pour l'articulation de l'extrémité 20 de la tige 21 d'un vérin pneumatique ou hydraulique 22. Cette extrémité 20 est conformée en chape et l'axe 23 d'articulation qui la relie au bec 19 est parallèle à tous les axes d'articulation décrits précédemment.

Sous la platine 1, l'unité selon l'invention comporte une pièce 24 pour un axe 25 également parallèle à tous les axes déjà décrits, autour duquel l'autre extrémité du vérin 22 est articulée.

A l'opposé de la pièce 24, la platine 1 comporte une butée fixe 26 en regard du bec 19 porté par la traverse 18 du palonnier qui constitue une limite à l'extension de la tige du vérin 22, limite que l'on peut régler en agissant sur des éléments de réglage 27 ou 28 (par exemple de tête de vis) respectivement solidaires de la pièce 26 du bec 19 et qu'il sera préférable d'ajuster de manière que les trois axes 10, 12, 14 de chaque embiellage soit alignés à l'intérieur de la pièce 5 au moment du contact des éléments 27 et 28. Il est même intéressant de régler les butées 27 et 28 pour que l'axe 12 soit légèrement au-delà de la ligne joignant les axes 10 et 14 de sorte que, en position haute, en cas de coupure de l'alimentation du vérin 22, l'effet du poids supporté par les chandelles (associé à des vibrations) ne tende pas à faire redescendre les chandelles. Dans cette configuration en effet, l'embiellage 11, 13 tendrait à s'écraser avec un mouvement de l'axe 12 vers la gauche de la figure 1, mouvement qui est contré par la présence de la butée 27. L'élévation des chandelles est donc irréversible.

Une rétraction de la tige 21 a pour effet d'entraîner le palonnier en rotation autour des axes 14 dans le sens des aiguilles d'une montre sur les figures 1 et 2, ce qui entraîne un coulissement vers le bas des chandelles 8 du fait du rapprochement des axes 10 et 14. La figure 2 illustre la position prise par les chandelles 8 et l'équipage qui leur est associé lorsque le vérin 22 est dans son état rétracté.

On aura noté que tous les éléments qui constituent l'unité d'indexation conforme à l'invention, sont assemblés de manière simple et notamment par des articulations. Or en matière d'usinage, les entraxes de paliers ou analogues sont des dimensions que l'on peut respecter avec une très grande précision à un coût relativement faible. L'ensemble platine-chandelle et dispositif-moteur associé peut donc être assemblé en tant qu'unité de manière précise. Il suffit alors de fixer la platine à un élément de bâti, non représenté sur les figures, solidaire du poste de travail où doit être installée l'unité d'indexation, et ce de manière précise, pour obtenir une grande précision dans la mise en place de la palette soutenue par les chandelles 8. En outre, les chandelles peuvent comporter à leur partie supérieure des dispositifs de centrage des palettes, ce qui permet d'assurer également avec précision la position de la palette dans le plan défini par la face supérieure de ces chandelles, ce plan étant lui-même dans une position parfaitement définie par l'unité d'indexation elle-même.

On comprend, au vu des figures 1 et 2, que la précision avec laquelle on doit commander l'arrêt du palonnier lors de l'extension de la tige de vérin 21 n'a pas à être extrêmement importante car une relativement grande amplitude du mouvement de ce vérin, lorsque les axes 10, 12 et 14 sont sensiblement alignés, n'entraîne qu'une petite amplitude de mouvement vertical des chandelles dans leur guide 4.

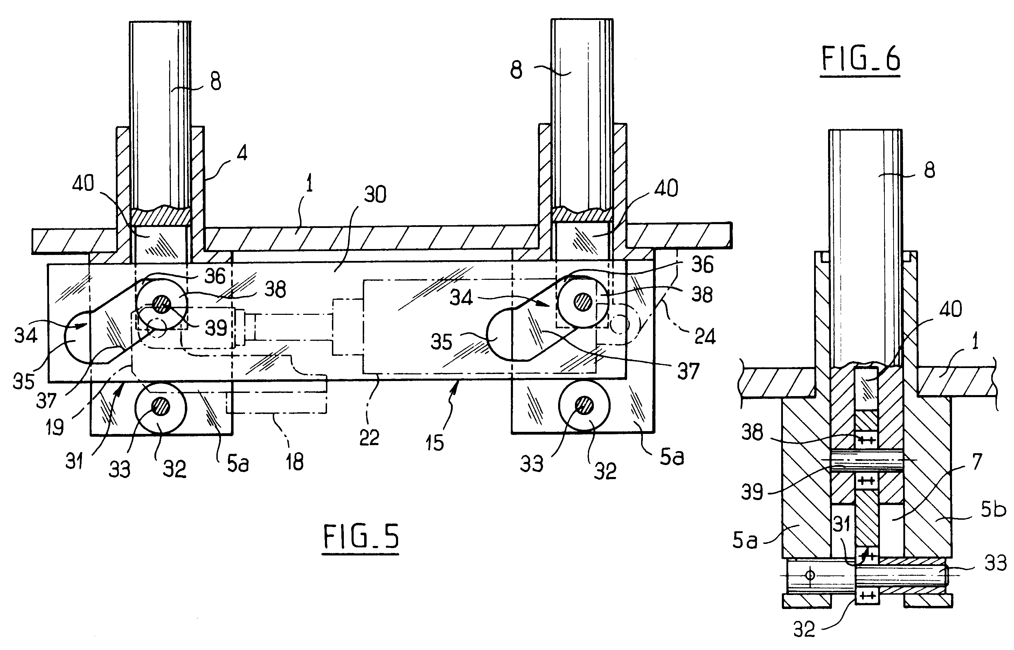

A la figure 5 qui est une vue semblable à celle de la figure 1 d'un second mode de réalisation de l'invention, on retrouve certains des éléments déjà décrits avec les mêmes références. A la place des deux bielles 16 et 17, la traverse 18 du palonnier relie deux plaques verticales telles que celle 30 représentée aux figures 5 et 6 dont les extrémités sont logées dans les espaces 7 séparant les bras 5a et 5b de chaque prolongation 5 du manchon 4. Le bord inférieur 31 de ces deux plaques 30 est supporté par un galet 32 (un par élément 5) monté sur un axe 33 s'étendant à la base de chacun des bras 5a et 5b. Chaque plaque 30 est en outre pourvue de deux ouvertures identiques 34 séparées l'une de l'autre d'une distance égale à l'entraxe des deux colonnettes 8 concernées par chaque plaque 30. Chacune des ces ouvertures 34 comporte un dégagement inférieur 35 et un dégagement supérieur 36 relié par une lumière oblique 37. Chaque colonnette 8 comporte à sa base un galet 38 monté libre en rotation sur un axe 39 que comporte la base de chaque colonnette pourvue d'une mortaise 40 dans laquelle est logé le galet 38. Le galet 38 est destiné à circuler dans la lumière 34 correspondante du palonnier et à cet effet, chaque plaque 30 est donc chevauchée par la partie inférieure mortaisée de chaque colonnette, la hauteur de la mortaise 40 étant suffisante pour que le mouvement vertical de la colonnette par rapport à la plaque 30 ne soit pas entravé.

A la figure 5 les chandelles 8 sont dans leur position d'élévation maximale, les galets 38 étant disposés dans les dégagements supérieurs 36 de l'ouverture 34. Si on déplace le palonnier vers la droite de cette figure 5 au moyen du vérin 22, les galets 38 vont s'engager dans la lumière oblique 37 pour atteindre le dégagement inférieur 35 de l'ouverture 34. Les bords de la lumière oblique 37 guident donc le galet dans sa descente sous l'effet du poids des colonnettes (augmenté par celui de la palette en début de la course), donc les chandelles 8 à prendre leur position inférieure. On obtient donc le même résultat que dans le mode de réalisation des figures précédentes. Dans ce mode de réalisation, on aura prévu que les dégagements supérieurs 36 des ouvertures 34 aient une certaine longueur par exemple supérieure au demi-diamètre des galets 38 pour être certain que ces galets aient totalement gravi la pente de la lumière oblique 37 et que les chandelles 8 soient dans leur état d'élévation maximale. Par cette disposition, on pourra donc tolérer une certaine imprécision quant à la position extrême gauche atteinte par le palonnier sous l'effet du vérin 22. On indiquera brièvement que le montage de ce dispositif s'effectue simplement d'abord en mettant en place les galets 38 dans les ouvertures 34, en attelant chacune des chandelles 8 aux galets 38 par les axes 39, en introduisant le montage ainsi réalisé dans les manchons 4 et enfin en mettant en place les galets 32 sous les plaques 30.

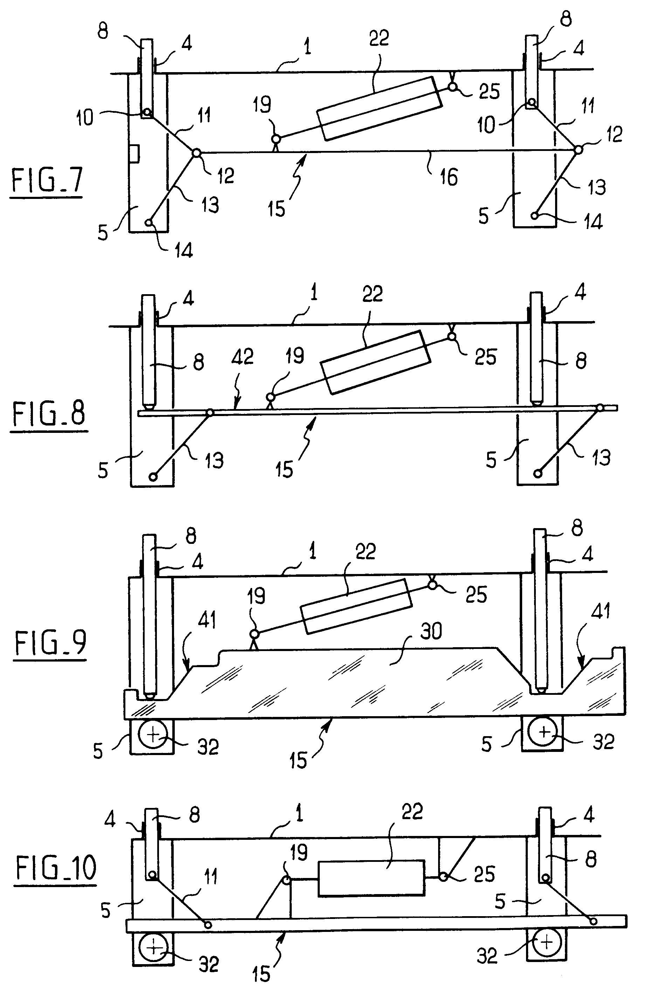

L'invention n'est pas limitée aux deux modes de réalisation qui viennent d'être décrits en détail ci-dessus. Les figures 7 et 9 illustrent schématiquement ces deux modes de réalisation tandis que les figures 8 et 10 illustrent des variantes possibles de ceux-ci.

Sur les figures 7 on retrouve tous les éléments décrits en regard des figures 1 à 4 avec les mêmes références. A la figure 9 les éléments des figures 5 et 6 sont représentés à l'exception des ouvertures 34 qui sont ici simplement schématisées par des surfaces de came 41 avec lesquelles les chandelles 8 coopèrent par simple appui.

A la figure 8 le palonnier 15 est comme à la figure 7 articulé par des biellettes 13 à la partie inférieure 5 des manchons 4, ce qui permet à ce palonnier d'être manoeuvré par le vérin 22 le long d'une trajectoire circulaire entre un point bas et un point haut, les chandelles 8 prenant simplement appui sur des surfaces horizontales 42 de ce palonnier 15.

A la figure 10 il s'agit également d'un palonnier 15 qui roule sur des galets 32 et auquel les chandelles 8 sont reliées par des biellettes 11.

## Revendications

1. Unité d'indexation précise d'une palette porte-charge dans le référentiel d'un poste de travail, notamment desservi par un transporteur, au moyen de laquelle la palette est élevée au-dessus de son plan de déplacement, *comportant* une platine (1) pour sa fixation, sous le plan de déplacement de la palette, à un élément de bâti appartenant au référentiel du poste de travail, cette platine étant équipée de deux paires de guides (4) pour des chandelles (8) élévatrices perpendiculaires à son plan, et un dispositif-moteur pour actionner en synchronisme les chandelles (8) qui coulissent dans leur guide (4), *comprenant* un palonnier (15), mobile par rapport à la platine (1) selon une trajectoire définie par des moyens de guidage (13, 32) solidaires de la platine, et un organe moteur (22) attelé entre le palonnier et la platine (1), le palonnier comportant des moyens (11, 34, 41) coopérant avec chacune des chandelles (8) pour transformer le mouvement du palonnier par rapport à la platine en un mouvement synchronisé vertical au moins ascendant de chacune des chandelles (8) dans les guides (4), caractérisée en ce que le palonnier (15) est en forme de H dont chacune des jambes (16, 17, 30) coopère avec au moins deux chandelles (8) et dont la traverse (18) porte un axe (19) d'articulation pour l'extrémité (20) d'un vérin (21, 22) dont l'autre extrémité est articulée (25) à la platine (1).

2. Unité selon la revendication 1, caractérisée en ce que les moyens de guidage du palonnier par rapport à la platine (1) comportent des biellettes (13) d'articulation conservant le palonnier parallèle à lui-même dans son mouvement par rapport à la platine.

3. Unité selon la revendication 1, caractérisée en ce que les moyens de guidage du palonnier comportent des galets (32) définissant un plan de guidage parallèle à la platine (1).

4. Unité selon l'une des revendications 1 à 3, caractérisée en ce que les moyens coopérant avec les chandelles (8) comportent des biellettes (11) articulées entre le palonnier et chaque chandelle.

5. Unité selon l'une des revendications 1 à 3, caractérisée en ce que les moyens coopérant avec des chandelles (8) comportent des surfaces d'appui (34, 41, 42) pour l'extrémité inférieure des chandelles.

6. Unité selon les revendications 3 et 5, caractérisée en ce que les surfaces d'appui forment des surfaces de came (34, 41) comportant une zone inclinée sur le plan de guidage reliant deux zones parallèles à ce plan.

7. Unité selon l'une des revendications précédentes, caractérisée en ce qu'une butée (27) solidaire de la platine (1) est disposée en regard du palonnier (15) pour limiter son mouvement dans le sens de l'élévation des chandelles (8).

8. Unité selon l'une des revendications précédentes, caractérisée en ce que chaque guide de chandelle comporte un manchon cylindrique (4) monté dans un orifice (2) de la platine comportant un épaulement (6) pour prendre appui contre la platine, ce manchon formant par une extension (5) sous la platine un support pour la partie des moyens de guidage (13, 32) du palonnier attelée ou supportée par la platine (1).

## Claims

1. An accurate indexing unit for indexing a load-carrying pallet in the frame of reference of a workstation, in particular a workstation served by a conveyor, whereby the pallet is raised above its displacement plane, the unit comprising a plate (1) enabling it to be fixed beneath the displacement plane of the pallet to a frame element belonging to the frame of reference of the workstation, said plate being fitted with two pairs of guides (4) for lift-pins (8) perpendicular to its plane, and with a drive device for synchronously actuating the lift-pins (8) which slide in their respective guides (4), the drive device comprising a yoke (15) movable relative to the plate (1) along a trajectory defined by guide means (13, 32) secured to the plate, and by a drive member (22) coupled between the yoke and the plate (1), the yoke including means (11, 34, 41) co-operating with each of the lift-pins (8) to transform the movement of the yoke relative to the plate into synchronized vertical movement at least in the upwards direction of each of the lift-pins (8) in the guides (4), the unit being characterized in that the yoke (15) is H-shaped with each of the limbs (16, 17, 30) thereof co-operating with at least two lift-pins (8) and with the cross-member (18) thereof carrying a hinge pin (19) for the end (20) of an actuator (21, 22) whose other end is hinged (25) to the plate (1).

2. A unit according to claim 1, characterized in that the means for guiding the yoke relative to the plate (1) comprise hinged links (13) that keep the yoke parallel to itself while it moves relative to the plate.

3. A unit according to claim 1, characterized in that the means for guiding the yoke include wheels (32) defining a guide plane parallel to the plate (1).

4. A unit according to any one of claims 1 to 3, characterized in that the means co-operating with the lift-pins (8) comprise links (11) hinged between the yoke and each of the lift-pins.

5. A unit according to any one of claims 1 to 3, characterized in that the means co-operating with the lift-pins (8) have bearing surfaces (34, 41, 42) for the bottom ends of the lift-pins.

6. A unit according to claims 3 and 5, characterized in that the bearing surfaces form camming surfaces (34, 41) including a zone that is inclined relative to the guide plane interconnecting two zones that are parallel to said plane.

7. A unit according to any preceding claim, characterized in that an abutment (27) secured to the plate (1) is disposed facing the yoke (15) to limit movement thereof in the lift-pin-raising direction.

8. A unit according to any preceding claim, characterized in that each lift-pin guide comprises a cylindrical sleeve (4) mounted in an orifice (2) of the plate and including a shoulder (6) to bear against the plate, said sleeve having an extension (5) beneath the plate to form a support for the portion of the guide means (13, 32) of the yoke that is coupled to or supported by the plate (1).

## Patentansprüche

1. Indexierungseinheit zur genauen Indexierung einer Lastpalette in dem Bezugssystem einer Arbeitsstation, die insbesondere von einem Förderer versorgt wird, durch den die Palette über ihre Bewegungsebene hinaus angehoben wird, umfassend eine Platine (1) zu ihrer Befestigung unterhalb der Bewegungsebene der Palette an einem Gestellelement, das zu dem Bezugssystem der Arbeitsstation gehört, wobei diese Platine mit zwei Paaren von Führungen (4) für senkrecht zu ihrer Ebene gerichtete Hubstützen (8) versehen ist, und eine Antriebsvorrichtung zum synchronen Betätigen der in ihren Führungen (4) gleitende Hubstützen (8) mit einem Waagebalken (15), der gegenüber der Platine (1) entlang einer durch mit der Platine verbundene Führungen (13, 32) vorgegebenen Bahn beweglich ist, und mit einem Motor (22), der mit dem Waagebalken und der Platine (1) gekoppelt ist, wobei der Waagebalken Mittel (11, 34, 41) hat, die mit jeder der Hubstützen (8) zusammenwirken, um die Bewegung des Waagebalkens relativ zur Platine in eine zumindest in aufsteigender Richtung synchrone Vertikalbewegung aller Hubstützen (8) in den Führungen (4) umzusetzen, dadurch **gekennzeichnet**, daß der Waagebalken (15) H-förmig ausgebildet ist, wobei jeder H-Schenke (16, 17, 30) mit mindestens zwei Hubstützen (8) zusammenwirkt und wobei der H-Querbalken (18) eine Gelenkachse (19) für das Ende eines Arbeitszylinders (21, 22) trägt, dessen anderes Ende über ein Gelenk (25) mit der Platine (1) verbunden ist.

2. Indexierungseinheit nach Anspruch (1), dadurch **gekennzeichnet**, daß die Mittel zur Führung des Waagebalkens relativ zur Platine (1) Gelenkstangen (18) umfassen, welche den Waagebalken bei seiner Bewegung relativ zur Platine parallel zu sich selbst halten.

3. Indexierungseinheit nach Anspruch 1, dadurch **gekennzeichnet**, daß die Mittel zur Führung des Waagebalkens Rollen (32) umfassen, die eine zur Platine (1) parallele Führungsebene definieren.

4. Indexierungseinheit nach einem der Ansprüche 1 bis 3, dadurch **gekennzeichnet**, daß die mit den Hubstützen (8) zusammenwirkenden Mittel Gelenkstangen (11) umfassen, die an dem Waagebalken und jeder Hubstütze angelenkt sind.

5. Indexierungseinheit nach einem der Ansprüche 1 bis 3, dadurch **gekenn**zeichnet, daß die mit den Hubstützen zusammenwirkenden Mittel Anlageflächen (34, 41, 42) für das jeweilige untere Ende der Hubstützen umfassen.

6. Indexierungseinheit nach den Ansprüchen 3 und 5, dadurch **gekennzeichnet**, daß die Anlageflächen Steuerflächen (34, 41) bilden, die eine gegenüber der Führungsebene geneigte Zone haben, die zwei zu dieser Ebene parallele Zonen miteinander verbindet.

7. Indexierungseinheit nach einem der vorangegangenen Ansprüche, dadurch **gekennzeichnet**, daß ein mit der Platine (1) verbundener Anschlag (27) gegenüber dem Waagebalken (15) so angeordnet ist, daß er dessen Bewegung in Hubrichtung der Hubstützen (8) begrenzt.

8. Indexierungseinheit nach einem der vorangegangenen Ansprüche, dadurch **gekennzeichne**t, daß jede Hubstützenführung eine zylindrische Hülse (4) hat, die in einer Öffnung (2) der Platine angeordnet ist und eine Schulter (6) zur Anlage an der Platine hat, wobei die Hülse durch eine Verlängerung (5) unter der Platine einen Träger für den Teil der Waagebalken-Führungsmittel (13, 32) bildet, der mit der Platine (1) gekoppelt oder an ihr gehalten ist.
